Europäisches Patentamt

European Patent Office

Office européen des brevets

(11) Publication number: 0 235 932
A1

(12) **EUROPEAN PATENT APPLICATION**

(21) Application number: 87300801.5

(22) Date of filing: 29.01.87

(51) Int. Cl.⁴: **G01S 13/87 , H01Q 25/00**

(30) Priority: 13.02.86 GB 8603588

(43) Date of publication of application:
09.09.87 Bulletin 87/37

(84) Designated Contracting States:
DE ES FR GB GR IT NL

(71) Applicant: THORN EMI Electronics Limited
Blyth Road
Hayes Middlesex UB3 1DL(GB)

(72) Inventor: Hawkins, Gerald Douglas Hugh
31, Vincent Drive
Shepperton Middlesex, UB3 1DL(GB)
Inventor: Pardoe, Richard John Lefroy
78, Dinorben Close Fleet
Aldershot Hampshire(GB)
Inventor: Voles, Roger
49, Park Road
Chiswick London, W4 3EY(GB)

(74) Representative: Fleming, Ian Alexander
THORN EMI Patents Limited The Quadrangle
Westmount Centre Uxbridge Road
Hayes Middlesex, UB4 0HB(GB)

(54) Dual mode radar system.

(57) In an airborne radar system, during transmission a waveguide feed outlet 1 provides a downward divergent conical beam 2 which is reflected by a concave reflector 3 to give a vertically upward parallel beam 4 reflected by a planar scanning plate 5 to give a forward-looking main beam 6. The main beam 6 can be scanned in azimuth by oscillation of the scanning plate 5 about a vertical axis and scanned in elevation by rotation of the scanning plate 5 about a horizontal axis in the plane of the mirror. Vertically below the waveguide feed outlet 1 there is a small hole 8 in the fixed reflector 3 in the region where the radiation from the waveguide feed outlet 1. The radiation passing through the hole 8 provides a beam for measuring altitude. The receiving energy returns the same way.

FIG 1

## DUAL MODE RADAR SYSTEM

The present invention relates to airborne radar systems and particularly to dual mode airborne radar systems.

One form of dual airborne radar system is disclosed in US. Patent 3,836,966. This system comprises a frequency modulated altimeter system and a second frequency modulated radar system. Both systems use a common local oscillator and RF receiver, thus reducing size, weight and cost. Each radar, however, has its own antenna system and the radar function is selected by switching to the appropriate antenna system. This arrangement has the disadvantage that neither radar. system operates continuously.

In some circumstances, it is essential that both radar systems operate continuously. It is also usually necessary to ensure that the size, weight and power consumption of the radar are kept as small as possible. An altitude measurement facility need not be provided if the altitude can be calculated from the normal radar returns, for example, with a forward-looking seeker radar in an airborne vehicle (aircraft or sub-munition) flying horizontally over flat ground, the altitude can be calculated provided the range to the ground can be measured and the angle of dip of the radar beam from the horizontal is known. However, if the altitude is low, the angle of dip of the radar beam will generally be small and thus the return signal from the ground will at best be very weak. If, in addition, the ground clutter level is low, these return signals may be absent most, if not all, of the time. Consequently calculation and control of the altitude becomes impossible.

An object of the present invention is to alleviate the aforementioned disadvantages.

The present invention provides a radar system for an airborne vehicle, the radar system comprising:-
means to generate a set of signals for transmission by the radar system;
an antenna having means to provide simultaneously a main beam and a substantially vertical secondary beam which is transverse to the main beam;
means to feed the set of signals to the antenna;
means to process return signals from the beam(s), thereby to obtain information on the altitude.

Preferably, the antenna comprises a signal feed to direct signals towards an arrangement of two relatively-moveable reflective surfaces thereby to produce a directed, scannable main beam, one of the reflective surfaces having means to separate out part of the energy incident into the arrangement, thereby to form a secondary beam which is transverse to the main beam. Preferably the separation means is a window in that reflective surface, such that energy incident on the window passes through the reflective surface. Advantageously, the window is positioned on the reflective surface to coincide with the area of reflection of "wasted energy", i.e. that area in which reflected energy is blocked by the feed means and hence does not contribute to the main beam.

Thus, the secondary beam is provided by using radiated energy which would otherwise have been reflected back into the waveguide feed. This energy would normally be wasted and would normally result in an impedance mis-match. This embodiment enables the altitude to be monitored with negligible modification to the radar and both functions can operate continuously.

The present invention also embodies an antenna for a radar system as defined hereinabove.

The invention will now be described with reference to the accompanying drawings in which:
Figure 1 shows an antenna according to the invention,
Figure 2 shows another antenna according to the invention; and
Figure 3 shows a block-diagram of the processing circuitry for a radar system embodying the present invention.

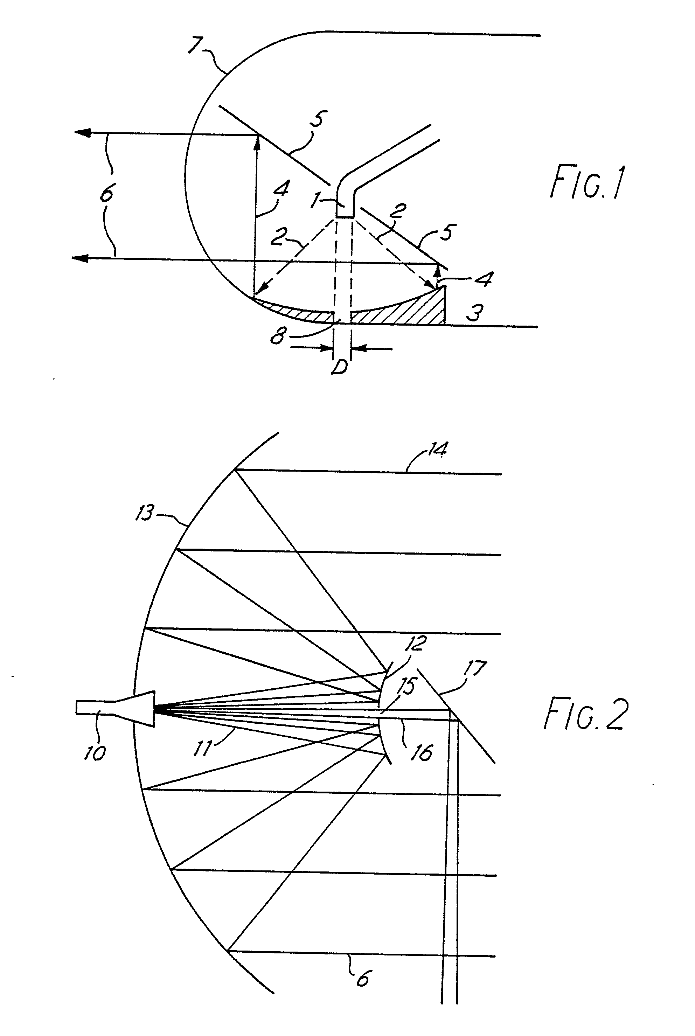

Referring now to Figure 1, during transmission a waveguide feed outlet 1 provides a downward divergent conical beam 2 with vertical axis. This beam is reflected by a concave reflector 3 to give a vertically upward parallel beam 4 which is reflected by a planar scanning plate 5 to give a forward-looking main beam 6. The main beam 6 can be scanned in azimuth by oscillation of the scanning plate 5 about a vertical axis. Alternatively or additionally, the main beam can be scanned in elevation by rotation of the scanning plate 5 about a horizontal axis in the plane of the mirror, thus varying the angle of dip of the main beam compared with the horizontal. It will be appreciated that during reception the received radiation follows the same beam pattern but in the reverse direction. The antenna arrangement is housed in a radome 7.

The special feature of the present invention is that vertically below the waveguide feed outlet 1 there is a small hole 8 in the fixed reflector 3 in the region where the radiation from the waveguide feed outlet 1 would be reflected back to the outlet 1. This part of the radiated energy would thus be wasted and would give an impedance mis-match at the outlet 1. The radiation passing through the hole 8 provides a beam for measuring altitude. The received energy returns the same way. It will be appreciated that the first response from a transmitted pulse of radiation will be that providing the altitude measurement, reflections of the main beam being delayed longer due to the greater range. Similarly if the transmission is frequency modulated continuous wave, the response with the smallest frequency difference compared to the current transmitted frequency will be that providing the altitude measurement.

Figure 2 shows an alternative arrangement in which during transmission a waveguide feed outlet 10 provides a forward-looking divergent conical beam 11 which is reflected by a convex reflector 12 on to a parabolic reflector 13 to provide a forward-looking parallel beam 14. A window 15 is provided in the convex reflector 12 coaxical with the divergent beam 11. This allows a narrow beam 16 to pass through the convex reflector 12 on to a reflecting plate 17 which reflects the narrow beam vertically downwards. This arrangement is basically a Cassegrain antenna modified by the window 15 and the plane reflector 17.

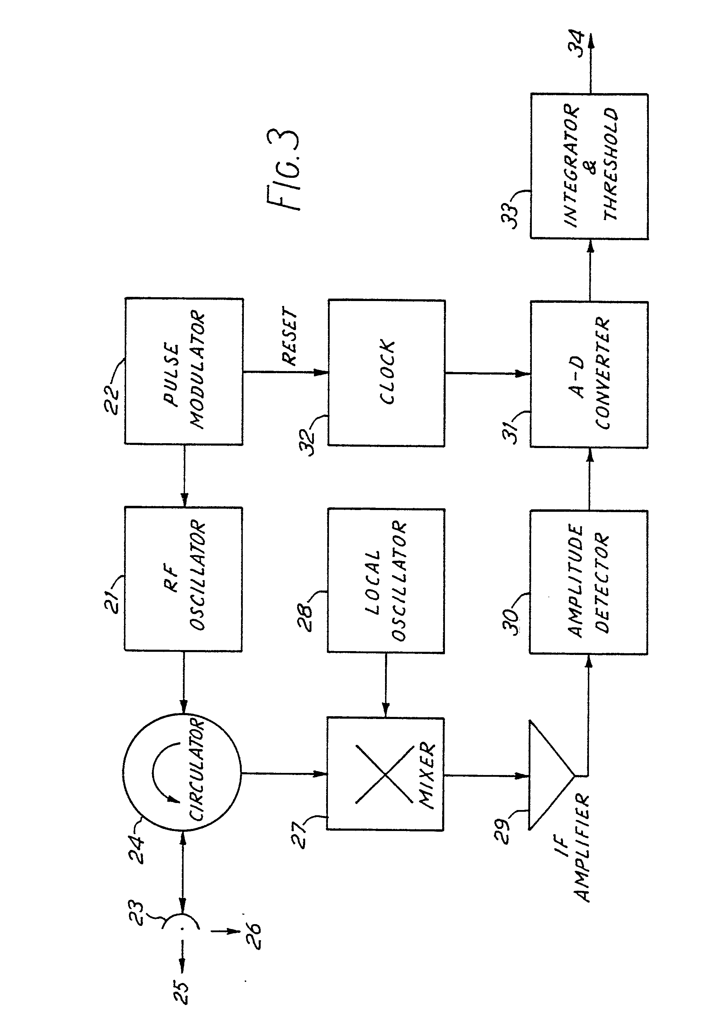

A typical seeker radar suitable for use with the invention is shown in Figure 3.

An RF oscillator 21 modulated by the pulse modulator 22 provides output pulses to the antenna 23 via the circulator 24. The antenna 23 provides a forward-looking beam 25 and a downward-looking beam 26 as described hereinbefore, with reference to Figures 1, 2. Reflected radiation received at the antenna 23 is passed via the circulator 24 to the mixer 27, where it is mixed with the output from the local oscillator 28. The resulting IF signal is amplified by the amplifier 29 and amplitude detected by the detector 30. It is then digitised by the A-D converter 31 under the control of the clock 32 which is reset by the pulse modulator 22 for each transmitted pulse. The digital output from the A-D converter is fed to the integrator 33 where it is integrated and thresholded, the threshold being set according to the prevailing clutter and noise levels. The output 34 provides in digital form the amplitude of the returns received by the antenna 23 as a function of time and hence of range. The delay from the time of the transmitted pulse to the first return indicates the altitude, as the signal received via the vertical beam 26 will have the shortest range. The other returns will represent reflectors within the foot-print on the ground of the relevant transmitted pulse and therefore the scan angle will be known.

It will be appreciated that the invention can be used with other types of radars. For example, the radar could be coherent, or frequency modulation could be used instead of pulse modulation.

This invention provides continuous operation of both the forward-looking radar system and the altimeter system. Furthermore, little modulation is required to the forward-looking radar system to provide the altimeter facility and no extra volume or weight is involved.

**Claims**

1. A radar system for an airborne vehicle, the radar system comprising:-
means to generate a set of signals for transmission by the radar system;
an antenna having means to provide simultaneously a main beam and a substantially vertical secondary beam which is transverse to the main beam;
means to feed the set of signals to the antenna;
means to process return signals from the beam(s), thereby to obtain information on the altitude.

2. A radar system according to Claim 1, wherein the antenna comprises a signal feed to direct signals towards an arrangement of two relatively-moveable reflective surfaces thereby to produce a directed, scannable main beam, one of the reflective surfaces having means to separate out part of the energy incident into the arrangement, thereby to form a secondary beam which is transverse to the main beam.

3. A radar system according to Claim 2, wherein the separation means is a window in that reflective surface, such that energy incident on that window passes through the reflective surface.

4. A radar system according to Claim 3, wherein the window is positioned on that reflective surface to coincide with the area in which reflected energy is blocked by the feed means and hence does not contribute to the main beam.

5. An antenna for a radar system the antenna having means to provide simultaneously a main beam and a secondary beam which is transverse to the main beam.

6. An antenna according to Claim 5, wherein the antenna comprises a signal feed to direct signals towards an arrangement of two relatively-moveable reflective surfaces thereby to produce a directed, scannable main beam, one of the reflective surfaces having means to separate out part of the energy incident into the arrangement, thereby to form a secondary beam which is transverse to the main beam.

7. An antenna according to Claim 6 wherein the separation means is a window in that reflective surface, such that energy incident on that window passes through the reflective surface.

8. An antenna according to Claim 7, wherein the window is positioned on that reflective surface to coincide with the area in which reflected energy is blocked by the feed means and hence does not contribute to the main beam.

Fig.1

Fig.2

FIG. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| Y | US-A-3 277 467 (G.M. BARNEY)<br>* figure 2; column 2, lines 43-69 * | 1,2,5,6 | G 01 S 13/87<br>H 01 Q 25/00 |
| Y | GB-A-2 031 655 (MARCONI)<br>* figure 1; page 2, lines 1-28 * | 1,2,5,6 | |
| A | US-A-3 623 093 (D.R. BOLLARD et al.)<br>* figure 1; abstract * | 1,2,5,6 | |
| A | US-A-3 657 719 (D.R. BOLLARD et al.)<br>* figure 1; abstract * | | |
| A | EP-A-0 155 761 (ANDREW CORP.)<br>* figure 2; page 3, lines 4-20 * | | TECHNICAL FIELDS SEARCHED (Int. Cl.4)<br><br>G 01 S 13/87<br>H 01 Q 25/00 |
| D,A | US-A-3 836 966 (B. FRISBEE)<br>* figure 1, abstract * | | |
| A | US-A-3 185 984 (C.H. CHILD et al.)<br>* figure 1; column 1, lines 33-42 * | | |

-----

The present search report has been drawn up for all claims

| Place of search | Date of completion of the search | Examiner |
|---|---|---|
| BERLIN | 27-04-1987 | BREUSING J |